Europäisches Patentamt

European Patent Office

Office européen des brevets

(11) Publication number: **0 185 261**
**A1**

## (12) EUROPEAN PATENT APPLICATION

(21) Application number: **85115468.2**

(22) Date of filing: **05.12.85**

(51) Int. Cl.⁴: **G 01 F 3/20**
**G 01 F 3/22**

(30) Priority: **15.12.84 GB 8431722**

(43) Date of publication of application:
**25.06.86 Bulletin 86/26**

(84) Designated Contracting States:
**AT BE CH DE FR GB IT LI LU NL SE**

(71) Applicant: **Northern Engineering Industries plc
NEI House Regent Centre
Newcastle upon Tyne NE3 3SB(GB)**

(72) Inventor: **Wilkin, Geoffrey Alan
9 Twyford Close
Cramlington Northumberland(GB)**

(74) Representative: **Graham, John George
Northern Engineering Industries plc Group Patents
Department c/o International Research & Development
Co. Ltd. Fossway
Newcastle-upon-Tyne NE6 2YD(GB)**

(54) Fluid operable apparatus.

(57) Fluid operable apparatus has diaphragms 12, 14 reciprocable by fluid in respective chambers 16, 18. Respective sets of valves 144A, B, E, F; 144C, D. G. H are operable in response to movements of the second and first diaphragms 14, 12, respectively, to effect changeovers of fluid flow paths to and from the chambers 16, 18, respectively. First and second detents 110, 116 which have respective curvilinear mutually engageable surfaces, are reciprocable by respective diaphragms 12, 14 along paths which intersect one another. The motions of the detents 110, 116 relative to each other are orbits each about the other whereby changeover of the flow paths of either chamber 16, 18 is prevented unless the diaphragm 12, 14 reaches the end of its stroke preceding that changeover. Stops are provided to determine the maximum strokes of the diaphragms 12, 14.

./...

EP 0 185 261 A1

Fig.1.

## DESCRIPTION

## "FLUID OPERABLE APPARATUS"

The invention relates to fluid operable apparatus.

Fluid operable apparatus is known (for example domestic gas meters of the dry type) in which double-acting diaphragms are interconnected by cranks and connecting links to a common rotary element so that forces are transmittable from either diaphragm to the other through the cranks and links in either sense of relative motion of the diaphragms. Therefore, friction or binding effects can arise at any point in the motion.

Furthermore, such known mechanism inherently give rise to offset loads and to moments which cause loss of efficiency or require the use of components and materials which are incompatible with operation by liquids and particularly operation by water carrying particulate contaminants.

A water or other fluid meter has been proposed in which the diaphragms are not interconnected in any way, each diaphragm being connected to a respective over-centre spring mechanism (see US patent specification No. 16049 of 1856 and Austrian patent specification No. 184743). In such a proposal either diaphragm may be prevented from completing a full stroke, for example by particulate solids accumulating in the diaphragm chamber but there is no means provided in the proposal for preventing the other diaphragm from acting to change over the flow paths of the first chamber. As a result, the meter continues to operate even though less than the correct volume of liquid is repeatedly discharged from that side of the first diaphragm which is executing strokes of indeterminate length. The spring mechanisms are themselves a cause of loss of efficiency and represents a likely point of failure through corrosion or build-up of sediment.

The invention whilst ensuring that valve changeover for either chamber cannot occur until the element therein has reached a predetermined point at its stroke, at least partly eliminates the loads which arise in known constructions in which the elements are interconnected.

Fluid operable apparatus, according to the invention, comprises first and second chambers, respective first and second elements reciprocable each in its own chamber by fluid and first and second valve means operable in response to movements of the second and first elements, respectively, to effect changeover of flow paths for liquid to and from the first and second chambers, respectively, characterised in that the apparatus further comprises first and second detents which have respective external curvilinear mutually engageable surfaces and which are reciprocable by the first and second element, respectively, along respective paths which intersect one another, first and second stops determining the maximum strokes of the first and second elements, respectively, the motions of the detents relative to each other being orbits each about the other whereby changeover of the flow paths of either chamber is prevented unless the element in that chamber reaches the end of its stroke preceding that changeover.

Fluid operable apparatus will now be described to illustrate the invention by way of example only with reference to the accompanying drawings, in which:-

Figure 1 is a horizontal longitudinal section in the plane containing the lines of action of the diaphragms; and

Figure 2 is a vertical section on the line II - II in Figure 1, but the cap 43 being omitted for clarity.

The figures show apparatus in the form of a water meter comprising the following main parts: a housing 10; first and second elements in the form of diaphragms 12, 14 reciprocable within respective chambers 16, 18; first and second elongate cylindrical members 20, 22 secured (each at one end) to a respective diaphragm 12, 14 and mounted in a common plane mutually at right angles in the housing 10; first valve means comprising four ball valves 144A, 144B, 144E, 144F; second valve means comprising four ball valves 144C, 144D, 144G, 144H; and cylindrical detents 110, 116 integral with the members 20, 22 and extending parallel to one another transversely of the members 20, 22.

The housing 10 consists of a main body 32 divided by internal structure into three open chambers 34, 38 and 42 which are closed by respective domed caps 35, 39, 43 secured to the body 32 by respective circumferential clamps 36, 40, 44. Respective O-ring seals 37, 41, 45 seal the caps 35, 39, 43 relative to the body 32. The body 32 and the caps 35, 39, 43 are injection moulded using polyethersulphone, for example.

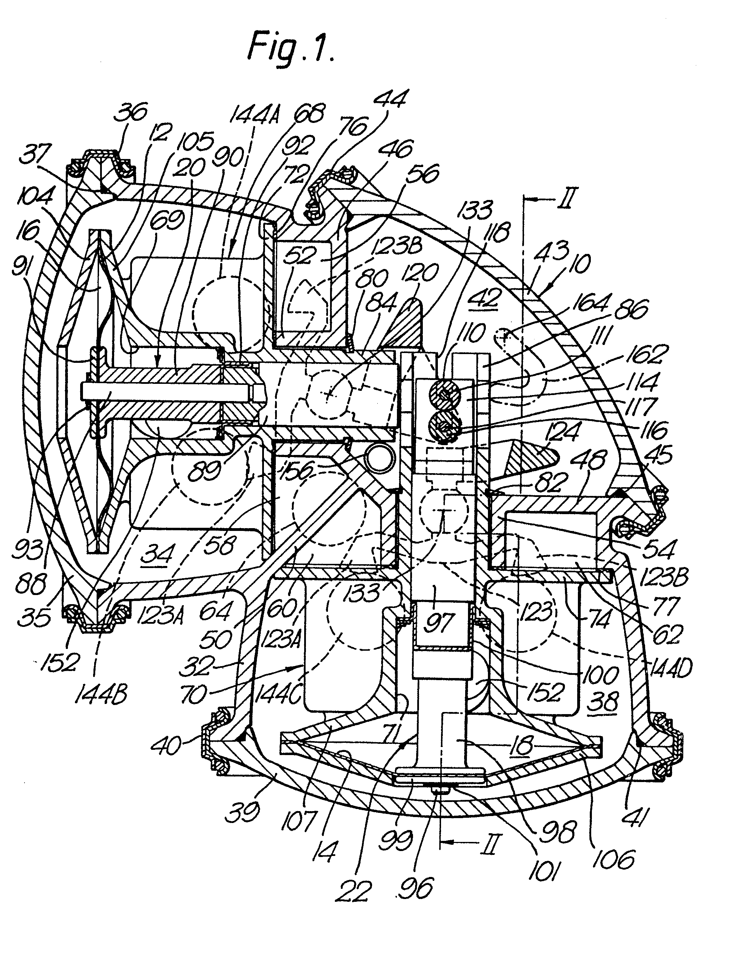

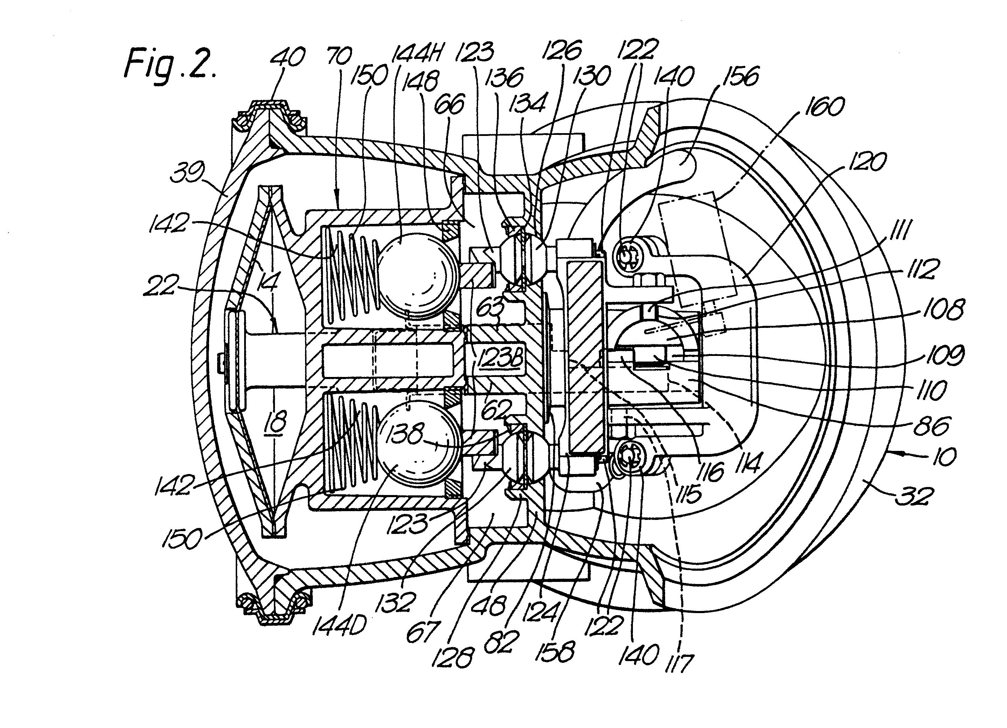

The internal structure of the main body 32 consists of walls 46, 48, 50 integral with the body 32 and with one another. The two walls 46, 48 each have a central aperture from the peripheries of which respective cylindrical flanges 52, 54 extend into the chambers 34 and 38. The annular spaces defined by the flanges 52, 54, the walls 46, 48, 50 and the respective parts of the main body 32 are each divided into two by pairs of webs lying above and below the plane of the section shown in Figure 1. The webs 56, 58, 60 and 62 of each pair are shown in Figure 1 and the pair of webs 62, 63 are shown in section in Figure 2.

The annular spaces are thus divided into fluid galleries. Two limbs of the outlet gallery lie at right angles to one another in a common plane parallel to but below the plane of Figure 1, an outlet port 64 communicating with adjacent ends of the limbs. Similarly, two limbs of the inlet gallery lie at right angles to one another in a common plane parallel to but above the plane of Figure 1, an inlet port (not shown) communicating with adjacent ends of the limbs,

- 4 -

Similarly, two limbs of the inlet gallery lie at right angles to one another in a common plane parallel to but above the plane of Figure 1, an inlet port (not shown) communicating with adjacent ends of the limbs, the axis of the inlet port being coincident with the axis of the outlet port 64.

In the drawings, only one limb 66 of the inlet gallery and its corresponding limb 67 of the outlet gallery are shown (see Figure 2).

It will be appreciated that the limbs of the galleries, when viewed along the axes of the chambers 34 and 38 are arcuate in shape.

The open sides of the limbs of the galleries are closed by flanges 72, 74 of valve housings 68, 70, respectively. The housings 68, 70 each have a central bore 69, 71 whose axis is coincident with the axis of the respective aperture in each wall 46, 48. The flanges 72, 74 engage respective gaskets 76, 77 shaped to extend around the peripheries of the galleries. The flanges 72, 74 are axially loaded against the gaskets 76, 77 by respective spring C-shaped circlips 80, 82 which respectively engage the walls 46, 48 and grooves in respective hollow cylindrical extensions 84, 86 of the valve housings 68, 70.

The extensions 84, 86 pass through the apertures in the walls 46, 48 to form bearing sleeves for the members 20, 22, respectively. The ends of the extensions 84, 86 are cut away so that, in the region in which the axes of the members 20, 22 intersect, those ends can overlie one another.

The valve housings 68, 70 are injection moulded using polyethersulphone, for example.

The members 20, 22 consist of a respective tie rod 88, 96 and three injection moulded parts of acetal copolymer, for example; an inner journal part 89, 97 which is a sliding fit in the extension 84, 86, respectively; an intermediate part 90, 98; and an outer part 91, 99. The inner periphery of the diaphragms 12, 14, respectively are clamped between the respective intermediate parts 90, 98 and outer parts 91, 99. The inner part 89, 97 is moulded onto the respective tie rod 88, 96 and has a section of reduced diameter to accommodate a respective rolling seal 92, 100 of ethylene/propylene elastomer, for example. Each seal 92, 100 is clamped at its outer periphery against an internal shoulder in the bore 69, 71, respectively, and at its inner periphery between the inner part 89, 97 and the intermediate part 90, 98, respectively.

The axial clamping force for the inner periphery of the diaphragm 12, 14 and the seals 92, 100 is provided by respective spring star-washers 93, 101 which are pushed onto the ends of the tie rods 88, 96, respectively.

The outer peripheries of the diaphragms 12, 14 are held between the edges of respective pairs of frusto-conical diaphragm chamber walls 104, 105 and 106, 107, which edges are clamped together by circumferential clamps (not shown). The inner walls 105, 107 are formed integrally with the respective valve housings 68, 70. The outer and inner walls 104, 106 and 105, 107 have respective central apertures whereby the respective diaphragm chambers 16, 18 communicate with the chambers 34 and 38 on one side of the diaphragms 12, 14 and with the bores 69, 71 of the valve housings 68, 70 on the other side of the diaphragms 12, 14.

Each diaphragm 12, 14 is of nitrile rubber reinforced with synthetic filaments such as polyamide filament, for example. The diaphragms are accordingly virtually of non-extensible construction. Each diaphragm 12, 14 lies closely against an inner frusto-conical surface in its chamber 16, 18 when the diaphragm occupies either of its ends positions. This ensures that an accurately predetermined volume is swept by every stroke of either diaphragm. Additionally, in such end positions, the diaphragms 12, 14 are not subjected to unduly high stresses owing to the support given by the inner frusto-conical surface of the chambers 16, 18.

The end of the inner parts 89, 97 of the members 20, 22 remote from the diaphragms 12, 14, respectively, are formed as segments 108, 114, respectively. The segments 108, 114 each have a respective abutment shoulder 109, 115 and an integral cylindrical detent 110, 116, the axes of the detents 110, 116 being parallel to one another and perpendicular to the plane containing the axes of the members 20, 22.

The abutment shoulder 109 is engageable with the detent 116 and the abutment shoulder 115 is engageable with the detent 110 to limit the inward movement of the members 20 and 22, respectively.

The segments 108, 114 carry respective drive pins 111, 117 which are guided during movement in a direction parallel to the respective axes of the members 20, 22 by engagement with slots 112, 118 in the extensions 84, 86. The closed ends of the slots 112, 118 limit outward movement of the members 20, 22, respectively.

The drive pins 111, 117 are in sliding engagement with respective slots in levers 124, 120. Each lever 120, 124 is substantially U - shaped and has mounted in each limb a stub shaft 122 (see Figure 2). The stub shafts 122 each pass through the walls 46, 48 into the fluid galleries and terminate in a valve operating member 123. The walls 46, 48 have apertures formed with part-spherical surfaces 126, the apertures being surrounded by cylindrical flanges 128 extending from the walls 46, 48 into the fluid galleries.

Slidably mounted on the stub shafts 122 are hemispherical bearing members 130, 132 between which an annular seal 134 is located. The facing surfaces of the bearing members 130, 132 are chamfered to accommodate the seal 134 during pivotal movement of the members 130, 132 about pivot axes 133 (see Figure 1). The bearing members 130 engage the surfaces 126 and the bearing members 132 are engaged by separate annular seating members 136 which are held in position by spring star-washers 138. The seating members 136 also compressingly engage the outer periphery of the seals 134. A spring star-washer 140 is pressed onto the stub shaft 122 to engage the respective limb of the lever 120, 124 thereby compressing the inner periphery of the seal 134 between the bearing members 130, 132.

Each valve operating member 123 is moulded at its centre onto the end of the respective stub shaft 122 and has at opposite ends two valve operating heads 123A and 123B. Pivotal movement of each pair of stub shafts 122 about their respective common pivot axis 133 by the respective lever 120, 124 from a central position (shown in the right hand side of Figure 1) causes one or other pairs of heads 123A, 123B (shown in the left hand side of Figure 1) to operate two ball valves 144 (see below).

The valve housings 68, 70 are each divided into four equal chambers 142 two of which have openings into a respective inlet gallery and the other two of which have openings into a respective outlet gallery. Each such opening is controlled by a valve consisting of a nylon ball 144 which is urged into engagement with a lip seal 148 surrounding the opening by a compression spring 150 (see Figure 2). In Figure 1, outlet valves 144A, 144B, 144C and 144D are shown; and in Figure 2, the outlet valve 144D and the corresponding inlet valve 144H is shown; the inlet valves 144E, 144F, 144G corresponding to outlet valves 144A, 144B, 144C not being shown in the drawings. The pair of valve operating members 123 pivotable by the lever 120 control valves 144A, 144B, 144E and 144F and the pair of operating members 123 pivotable by the lever 124 control valves 144C, 144D, 144G and 144H.

In each valve housing 68, 70, one pair of opposed chambers 142 communicate with the respective bore 69, 71 via openings 152 (see Figure 1) and the other pair of opposed chambers 142 communicate with the respective chambers 34, 38 via openings (not shown).

A flexible tube 156 is closed at one end and is connected at its other end by an adaptor 158 to the outlet port 64.

Operation of the meter will now be described with reference to Figure 1.

The construction of the meter is such as to ensure that a precise volume of water is displaced per complete cycle of operation of the meter.

In Figure 1, it is assumed that the meter is connected in a water supply system in which the pressure at the inlet port is greater than the pressure at the outlet port 64 of the meter.

As shown, the status of the meter is as follows:-

1.  the diaphragm 14 is in its outer limit position, the drive pin 117 engaging the end of the slot 118 in the segment 108 of the extension 86 to limit further outward movement of the member 22 and, consequently, the diaphragm 14;

2.  the detent 116 of the member 22 is no longer in the path of the detent 110 of the member 20;

3.  the drive pin 117 has caused the lever 120 to pivot the respective pair of valve operating members 123 about their common axis 133 so that the operating heads 123A have fully opened valves 144B and 144F (not shown), valves 144A and 144E (not shown) being shut;

4.  water from the inlet port is flowing into the inlet gallery, through the inlet valve 144F, the respective valve chamber 142 and opening therein into the chamber 34 and thence into the diaphragm chamber 16 to urge the diaphragm 12 to the right, the diaphragm 12 being in its position between the outer and the inner limits thereof;

5.  water is flowing from the diaphragm chamber 16 on the opposite sides of the diaphragm 12 through the bore 69, respective opening 152, chamber 142 and outlet valve 144B into the outlet gallery and out through the outlet port 64;

6.  the drive pin 111 has caused the lever 124 to pivot the respective pair of valve operating members 123 about their common axis 133 to their central
position in which neither of the operating heads
123A and 123B are acting on the pairs of valves
144C, 144G and 144D, 144H;  and

7.    as the detent 116 of the member 22 is no longer
      in the path of the detent 110 of the member 20,
      the detent 110 has been able to occupy a position
      at the intersection of the axes of the members 20, 22.

Continued movement of the diaphragm 12 to the right results in
the drive pin 111 causing the lever 124 to pivot the respective pair
of operating members about their common axis 133 to open valves 144D
and 144H.  Water from the inlet port now flows into the other limb
of the inlet gallery also, through the inlet valve 144H, the respective valve chamber 142 and opening into the chamber 38 and thence
into the diaphragm chamber 18 to urge the diaphragm 14 inwardly (as
seen in Figure 1).  Simultaneously, water is flowing from the
diaphragm chamber 18 on the opposite side of the diaphragm 14
through the bore 71, respective opening 152, chamber 142 and outlet
valve 144D into the outlet gallery and out through the outlet port 64.

The continued movement of the diaphragm 12 also moves the detent
110 to the right so that the detent 116 can move along the axis of
the member 22 until, when the diaphragm 12 has reached its inner
limit, the detent 116 can occupy a position at the intersection of
the axes of the members 20, 22.  Further inward movement of the
diaphragm 12 is limited by engagement of the shoulder 109 on the
member 20 with the detent 116 on the member 22.  The inward movement
of the diaphragm 14 has also resulted in the closure of valves 144B
and 144F.

Continued inward movement of the diaphragm 14 to its inner limit
position results in the opening of valves 144A and 144E and the flow
of water therethrough causes the diaphragm 12 to move to the left.
The detent 110 again passes through a position at the intersection
of the axes of the members 20, 22 when the diaphragm 14 is in its
inner limit position.

The movement of the diaphragm 12 to the left causes valves 144D, 144H to close and valves 144C, 144G to open to reverse the movement of the diaphragm 14.

It can be seen that the motion of the detents 110, 116 relative to one another is orbital.

If either diaphragm 12, 14 fails to reach one or other of its limit positions for example owing to a build up of debris in the diaphragm chamber 16, 18, then the respective detent 110, 116 will not be moved out of the path of the other of the detents 110, 116 and the meter will stop. Thus, unless each diaphragm substantially completes its stroke, the meter will cease to function.

The detents, together with the stop arrangements for preventing overtravel, ensure that each cycle of the meter accurately represents a displacement of water equal to two times the swept volume of the chambers 16, 18.

However, the detents are not physically interconnected and they will impose forces initially upon one another only if either diaphragm attempts to move such as to advance the phase-relationship of one detent in relation to the other. In general, the operation of the meter is not dependent upon any transmission of force between the detents 110, 116. Thus, no binding or friction forces or bending or turning movements are created by inter-engagement between the detents 110, 116 and such inter-engagement is not mandatory for operation of the meter. The meter has the freedom to operate as though there were no means whatsoever through which one element could exert force on the other. The meter is thus free to operate without any friction or binding forces or bending or turning movements arising from the detents 110, 116. In general, disadvantageous loads on components, such as binding loads or twisting or turning loads or other restrictions on the diaphragm 12, 14 for example are relatively reduced or eliminated entirely.

In a modification, the stops limiting the movement of the diaphragm 12, 14 could be webs extending across the central apertures in the walls 104, 105, 106, 107 forming the diaphragm chambers
16, 18.

In a further modification, the detents could be cylindrical
rollers, or the detents could be elipsoidal in shape; other methods
of operating the valves could be used.

The number of cycles of operation of the meter can be determined
using a mechanical counter 160 driven through a ratchet by a lever
162 connected to the member 20 for pivotal movement about an axis
164.  The cap 43 of the housing 10 would be provided with a window
to enable the counter 160 to be used.  Additionally or alternatively,
the cycles can be determined using electronic proximity sensors and
electronic counters.

To minimise the pressure differential across the rolling seals
92, 100, the chamber 42 can be filled with either the working fluid,
e.g. water, or with an appropriate incompressible fluid, e.g.
lubricant.  The working fluid can be allowed to enter the chamber 42
through an opening (not shown) adjacent the outlet port 64, the
tube 156 being omitted.  However, it is preferable that the fluid in
the chamber 42 be clean fluid and,consequently, the tube 156 is used
as a flexible membrane to equalise the pressure between the fluid in
the chamber 42 and the working fluid at the outlet port 64.

Apparatus constructed in accordance with the invention can be
used to meter volumetric flow, for example as described above.

In heating systems, if the difference between the temperature
at which fluid is supplied and the temperature at which fluid is
returned is monitored in addition to using such apparatus to meter
volumetric flow of the fluid, then the amount of thermal energy
extracted from the fluid can be metered.

Such apparatus is essentially a motor driven by a fluid stream.
Consequently, it is possible to use the apparatus to drive an
ancillary pump or pumps for dosing purposes, preferably by extension
of one or both members 20, 22 through appropriate seals in the respective caps 34, 38. The ancillary pumps are used to provide a rate of flow of a second fluid in direction proportion to the flowrate of a primary fluid through the apparatus. The second fluid can be for example fertilizer, nutrients or other chemicals which are to be added in accurate quantities to the primary fluid stream. Preferably, the ancillary pumps are reciprocating positive displacement pumps using a piston or a diaphragm. It will be appreciated that such a dosing system achieves the required dosing without an external power requirement other than a sufficient head of pressure in the primary fluid stream.

The working fluid for such apparatus in accordance with the invention may be gas at a high pressure which, owing to the pressure it is under, tends to act like a liquid.

- 13 -                                              **0185261**

CLAIMS

1. Fluid operable apparatus comprising first and second chambers (16, 18), respective first and second elements (12, 14) reciprocable each in its own chamber (16, 18) by fluid and first and second valve means (144A, 144B, 144E, 144F; 144C, 144D, 144G, 144H) operable in response to movements of the second and first elements (18, 16), respectively, to effect changeover of flow paths for fluid to and from the first and second chambers (16, 18), respectively, <u>characterised in that</u> the apparatus further comprises first and second detents (110, 116) which have respective external curvilinear mutually engageable surfaces and which are reciprocable by the first and second elements (12, 14), respectively, along respective paths which intersect one another and first and second stops (109, 115; 112, 111, 118, 117) determining the maximum strokes of the first and second elements (12, 14), respectively, the motions of the detents (110, 116) relative to each other being orbits each about the other whereby changeover of the flow paths of either chamber (16, 18) is prevented unless the element (12, 14) in that chamber (16, 18) reaches the end of its stroke preceding that changeover.

2. Apparatus according to claim 1, <u>characterised in that</u> the elements (12, 14) each comprise a diaphragm (12, 14) secured at the outer periphery thereof to the outer periphery of the respective chamber (16, 18) and at a central part thereof to a respective first or second elongate member (20, 22) which carries the respective detent (110, 116) the elongate members (20, 22) being slidably mounted in a common plane mutually at right angles for reciprocation.

3. Apparatus according to claim 1 or 2, <u>characterised in that</u> the detents (110, 116) each comprise a fixed cylindrical detent (110, 116).

4. Apparatus according to claim 1 or 2, <u>characterised in that</u> the detents (110, 116) each comprise a cylindrical roller.

5. Apparatus according to any preceding claim, <u>characterised in</u> <u>that</u> the first stops (109, 115) comprise an abutment surface (109, 115) reciprocable by the respective element (12, 14) into and out of engagement with the detent (116, 110) of the other element (14, 12) and <u>characterised in that</u> the second stops (112, 111, 118, 117) comprise a fixed abutment surface (112, 118) and a movable abutment surface (111, 117) reciprocable into and out of engagement with the fixed abutment surface (112, 118) by the respective element (12, 14).

6. Apparatus according to any preceding claim, <u>characterised in</u> <u>that</u> the chambers (16, 18) are each bounded by opposed frusto-conical surfaces (104, 105; 106, 107) engageable by the respective element (12, 14) at the limit positions of the stroke of the element (12, 14).

Fig.1.

Fig. 2.

**European Patent Office**

## EUROPEAN SEARCH REPORT

### DOCUMENTS CONSIDERED TO BE RELEVANT

EP 85115468.2

| Category | Citation of document with indication. where appropriate, of relevant passages | Relevant to claim | CLASSIFICATION OF THE APPLICATION (Int Cl 4) |
|---|---|---|---|
| D,A | AT - B - 184 743 (PLATZER)<br>* Fig. *<br>-- | 1,2 | G 01 F 3/20<br>G 01 F 3/22 |
| A | AT - B - 203 232 (PRESNA)<br>* Page 1, lines 1-20; fig. *<br>---- | | |

|  |  |
|---|---|
|  | **TECHNICAL FIELDS SEARCHED (Int. Cl.4)**<br><br>G 01 F 3/00 |

The present search report has been drawn up for all claims

| Place of search | Date of completion of the search | Examiner |
|---|---|---|
| VIENNA | 20-03-1986 | BURGHARDT |